# EUROPÄISCHE PATENTSCHRIFT

(11) **EP 4 392 752 B1**
(45) Veröffentlichungstag und Bekanntmachung des Hinweises auf die Patenterteilung: **17.09.2025**
(21) Anmeldenummer: 22741262.4
(22) Anmeldetag: 07.07.2022
(51) Int. Cl.: G01M 11/00, B25B 11/00, G01M 99/00, G01N 21/95, G01J 3/50, G01B 5/00

(54) **VERFAHREN ZUR AUSSENSEITIGEN QUALITÄTSKONTROLLE VON BAUTEILEN**
METHOD FOR EXTERNAL QUALITY CONTROL OF COMPONENTS
PROCÉDÉ DE CONTRÔLE DE QUALITÉ EXTERNE DE COMPOSANTS

(30) Priorität: 25.08.2021 DE 102021121962
(43) Veröffentlichungstag der Anmeldung: 03.07.2024
(73) Patentinhaber: RESRG Automotive SE & Co. KG, 95111 Rehau (DE); Bayer GmbH & Co KG, 91637 Wörnitz (DE); SG-Engineering GmbH, 91541 Rothenburg (DE)
(72) Erfinder: ABENDSCHEIN, Horst, 91555 Feuchtwangen (DE); BAYER, Christian, 91583 Schillingsfürst (DE); DELIBAMIDIS, Georgios, 91567 Herrieden (DE); ENGELHARDT, Andreas, 91599 Dentlein a. F. (DE); GLANZ, Stefan, 91616 Neusitz (DE); HIRSCH, Hirsch, 91555 Feuchtwangen (DE); NIXEL, Johannes, 905999 Dietenhofen (DE); REU, Wolfgang, 91607 Gebsattel (DE)
(86) Internationale Anmeldenummer: PCT/EP2022/068972
(87) Internationale Veröffentlichungsnummer: WO 2023/025450

(56) Entgegenhaltungen:
- CN-A- 111 076 661
- DE-A1- 102015 107 859
- DE-A1- 102015 107 867
- DE-A1- 102017 128 207
- JP-A- 2002 243 582
- US-A1- 2009 091 768
- US-A1- 2012 018 938

## Beschreibung

Die Erfindung betrifft ein Verfahren zur außenseitigen Qualitätskontrolle von Bauteilen mit den Merkmalen des Oberbegriffs des Patentanspruchs 1. Ein solches Verfahren ist aus der JP 2002 243582 A sowie der US 2009/091768 A1 bekannt. Weiterer relevanter Stand der Technik ist in der CN 111 076 661 A beschrieben.

Bei Messvorgängen ist es generell von großer Bedeutung, dass das verwendete Messgerät korrekt gegenüber dem zu vermessenden Objekt positioniert wird, um eine einwandfreie Messung und damit belastbare Messergebnisse zu gewährleisten. Dies ist insbesondere bei Objekten in Form von großflächigen Bauteilen der Fall. Eine Form der Qualitätskontrolle von beispielsweise lackierten polymeren Außenanbauteilen für Kraftfahrzeuge ist die Messung der Farbgenauigkeit der Lackierung im Vergleich zu einem in der Regel vom Automobilhersteller vorgegebenen Farbsollwert. Eine solche Farbmessung kann z.B. mit einem Messkopf der Fa. BYK-Gardner^{®} (bspw. einem BYK-mac^{®} i Robotic Messkopf) durchgeführt werden. Schwierig bei der Durchführung einer solchen Messung ist die Anforderung, dass der Messkopf bei der Messung exakt senkrecht zum zu vermessenden Bereich auf der Bauteiloberfläche ausgerichtet sein muss, um die Messung korrekt und reproduzierbar durchführen zu können. Hierzu sind in der Regel am Messkopf umfangsseitig verteilt Abstandssensoren angeordnet, deren Messwerte möglichst identisch sein müssen, damit eine lotrechte Ausrichtung des Messgerätes zur Bauteiloberfläche vorliegt. Bei Bauteilen, die über eine lediglich beschränkte Stabilität verfügen, wie dies beispielsweise bei polymeren Kfz-Stoßfängern aufgrund deren vergleichsweise großen Abmessungen bei gleichzeitig geringer Wandstärke regelmäßig der Fall ist, ist diese Anforderung problematisch. In der Praxis werden daher entsprechende Messungen immer noch von Hand durchgeführt. Aber auch bei anderen Bauteilen, deren Positionierung in der Halteeinrichtung keine exakte Fixierung ermöglicht, z.B. an Hängeeinrichtungen angeordneten Küchenarbeitsplatten oder Kühlschrankelemente, stellt die Anforderung der exakt senkrechten Ausrichtung des Messkopfes zum Messobjekt eine Herausforderung dar.

Der Erfindung liegt die Aufgabe zugrunde, ein Verfahren mit den eingangs beschriebenen Merkmalen anzugeben, das sich durch eine erleichterte korrekte Durchführung des Messvorganges auszeichnet.

Erfindungsgemäß wird diese Aufgabe durch die Merkmale des Patentanspruchs 1 gelöst. Die Erfindung beruht auf der Erkenntnis, dass eine automatisierte Durchführung der Qualitätskontrolle auch bei Vorliegen der eingangs skizzierten Problematik möglich ist, wenn das Bauteil zusätzlich im unmittelbaren Messbereich an seiner Rückseite durch eine entsprechende, mittels Unterdruck arbeitende Fixiervorrichtung rückseitig fixiert wird und damit die lotrechte Ausrichtung des Messgerätes zum Bauteil hierdurch sicher gewährleistet werden kann. Etwaige Ungenauigkeiten aufgrund eines vergleichsweise flexiblen Bauteils bzw. einer gewissen Unsicherheit hinsichtlich der exakten Bauteilposition können durch die erfindungsgemäße rückseitige Fixierung kompensiert werden, so dass eine exakte Messung auch mittels einer vollständig automatisierten Durchführung der Qualitätskontrolle möglich ist. Durch den Unterdruck wird ferner ein Wegrutschen des Bauteils, beispielsweise während des Messvorganges, sicher verhindert. Im Rahmen der Erfindung liegt es hierbei insbesondere, dass die Annäherung des Messgerätes an die Bauteiloberfläche durch eine Verfahrbewegung des Messgerätes erfolgt. Alternativ dazu ist es aber auch möglich, dass die Bauteiloberfläche an das Messgerät herangefahren wird, beispielsweise nach rückseitiger Fixierung gemeinsam mit der Fixiervorrichtung. Die Halteeinrichtung, an der das zu vermessende Bauteil angeordnet ist, kann grundsätzlich beliebig gestaltet sein. So liegt beispielsweise eine das Bauteil vorab bereits fixierende Halteeinrichtung ebenso im Rahmen der Erfindung wie eine Halteeinrichtung, in die das Bauteil eingehängt ist und somit noch eine gewisse Beweglichkeit aufweist. In diesem Fall erfolgt die genaue Fixierung des Bauteils erst durch die Fixiervorrichtung.

Zweckmäßigerweise weist die Fixiervorrichtung eine Fixieroberfläche auf, deren Kontur an den rückseitigen Fixierbereich des Bauteils angepasst ist. Diese Fixieroberfläche kann beispielsweise konvex ausgebildet sein und dabei z.B. im Wesentlichen der lokalen Krümmung des Bauteils an seiner der zu vermessenden Oberfläche abgewandten Seite entsprechen. Ferner kann die Fixiervorrichtung ein kissenförmiges Auflageelement aus einem elastischen Material, vorzugsweise Silikon oder einem Gummi, aufweisen. Hierdurch wird der Aufbau des Unterdrucks zur Fixierung begünstigt und die Fixiervorrichtung besitzt außerdem eine Anpassungsmöglichkeit an die lokale Kontur der Bauteilrückseite.

Erfindungsgemäß besitzt die Fixiervorrichtung einen zentrischen Auflagepunkt aus einem unelastischen Material, beispielsweise einem Metall, der während des Messvorgangs mit dem Messpunkt an der Bauteilaußenseite eine senkrecht zur lokalen äußeren Bauteiloberfläche stehende Vermessungsachse bildet. Erfindungsgemäß liegen ferner das Messgerät mit seinem Messpunkt und die Mitte des Auflagepunktes konstruktiv bedingt starr auf einer gemeinsamen Achse, die mit der Vermessungsachse zusammenfällt. Der Auflagepunkt kann einen nach außen hin kugelförmigen Oberflächenbereich und beispielsweise in seiner Mitte ein abgeflachtes Zentrum aufweisen. Der unelastische Auflagepunkt gewährleistet einen während des gesamten Messvorganges definierten Abstand zwischen Bauteiloberfläche und Messgerät. Im Rahmen der Erfindung kann es liegen, dass der Auflagepunkt sphärisch gelagert ist. Dies ermöglicht kleine Schwenkbewegungen des Auflagepunktes zwecks Anpassung an die lokale Bauteilgeometrie. Hierdurch können ggf. rückseitige Abzeichnungen auf dem Bauteil vermieden werden.

Zweckmäßigerweise wird das Messgerät über eine, beispielsweise motorisch (z.B. mittels eines Elektromotors) angetriebene, Linearführungseinrichtung, insbesondere eine Spindel, gegen die äußere Oberfläche des Bauteils zugestellt. Dies erlaub eine präzise, kontrollierte Heranführung des Messgerätes an den zu vermessenden Bereich des Bauteils. Vorzugsweise erfolgt die Fixierung des Bauteils durch den Aufbau des Unterdrucks vor der Heranführung des Messgerätes an die äußere Bauteiloberfläche.

Im Rahmen der Erfindung liegt es, dass die äußere Oberfläche des Bauteils zumindest bereichsweise von einer Lackierung gebildet wird. Wie bereits erwähnt, findet die erfindungsgemäße Lehre insbesondere Anwendung bei Farbkontrollmessungen. Vor allem bei Lackierungen, insbesondere im Automobilbereich, bestehen hohe Anforderungen an die genaue Einhaltung des vorgegebenen Farbtons. Mittels des erfindungsgemäßen Verfahrens kann eine solche Messung vollkommen automatisiert und äußerst präzise durchgeführt werden.

Das Messgerät und die Fixiervorrichtung können gemeinsam an einer automatisch verfahrbaren Einrichtung, vorzugsweise an einem Industrieroboter montiert werden. Alternativ zu einem, in der Regel autonom arbeitenden, Industrieroboter kann auch ein Cobot, also ein mit Menschen in einem gemeinsamen Arbeitsbereich interagierender Roboter oder dergl. zum Einsatz kommen. An die automatisch verfahrbare Einrichtung kann eine beispielsweise als C-förmiger Bügel ausgebildete Haltevorrichtung angeschlossen sein, an der die Fixiervorrichtung einerseits sowie das in der Regel an einer Halterung (z.B. Linearführung, s.o.) montierte Messgerät andererseits angeordnet werden können, beispielsweise an den beiden einander gegenüberliegenden Enden des C-förmigen Bügels. Während des Messvorganges befindet sich der zu vermessende Bereich des Bauteils dann innerhalb einer vom Bügel aufgespannten Ebene, vergleichbar mit der Positionierung wie in einer Schraubzwinge.

Bevor ein Messvorgang durchgeführt wird, erfolgt vorzugsweise eine messtechnische Sicherstellung, dass das Messgerät lotrecht auf der zu vermessenden Bauteiloberfläche steht. Hierzu kann das Messgerät an das Bauteil herangefahren und mit am Messgerät zusätzlich vorhandenen Abstandssensoren können vorab entsprechende Abstandsmessungen durchgeführt werden. Die Abstandssensoren sind in der Regel umfangsseitig um einen Messkopf des Messgerätes herum angeordnet und sollen allesamt einen innerhalb eines Toleranzfeldes liegenden identischen Abstand zur zu vermessenden Bauteiloberfläche messen, wodurch die senkrechte Ausrichtung dieser Oberfläche zum Messkopf sichergestellt ist. Falls keine ausreichend genau lotrechte Ausrichtung gemessen wird, kann es von Vorteil sein, wenn die automatisch verfahrbare Einrichtung nach der Bauteilfixierung und vor dem Messvorgang mindestens eine Schwenkbewegung ausführt, um die exakt senkrechte Ausrichtung des Messgerätes zur äußeren Bauteiloberfläche am Messpunkt sicherzustellen. Hierbei kann die zu vermessende Oberfläche, insbesondere aufgrund der Flexibilität des Auflageelementes, ihre Position weitestgehend beibehalten und wird nicht mitgekippt. Dies ermöglicht ein besonders schnelles und ggf. auch wiederholgenaues Ausrichten des Messgerätes.

Zweckmäßigerweise wird die Qualitätskontrolle an unterschiedlichen Stellen der äußeren Bauteiloberfläche durchgeführt, hierfür das Messgerät nacheinander jeweils den gewünschten Stellen der äußeren Bauteiloberfläche angenähert und hierzu die automatisch verfahrbare Einrichtung entsprechend in unterschiedliche Positionen verfahren.

Wie bereits erwähnt, kommt das erfindungsgemäße Verfahren insbesondere bei Farbkontrollmessungen zum Einsatz, wodurch andere Einsatzzwecke jedoch nicht ausgeschlossen werden. Als zu vermessende Bauteile sind insbesondere großflächige Bauteile für Kraftahrzeuge zu nennen, beispielsweise Stoßfänger, Spoiler oder Kotflügel. Aber auch Anwendungen außerhalb des Automobilbereichs, z.B. die Qualitätskontrolle von Küchenarbeitsplatten oder Kühlschrankelementen (bspw. Kühlschranktüren), liegen im Rahmen der Erfindung. Großflächige Bauteile meint insbesondere solche mit einer äußeren Oberfläche von mehr als 0,15 m², insbesondere mehr als 0,3 m². Hierdurch wird die Anwendung der erfindungsgemäßen Lehre für kleinere Bauteile jedoch nicht ausgeschlossen, beispielsweise mit einer Oberfläche von lediglich mindestens 0,02 m². Die Materialstärke des Bauteils kann vergleichsweise gering sein und z.B. über das Bauteil gemittelt maximal 1 cm, insbesondere maximal 0,5 cm betragen. Denn die erfindungsgemäße Lehre ermöglicht es, auch vergleichsweise nachgiebige Bauteile sicher zu vermessen.

Zur Durchführung des vorbeschriebenen erfindungsgemäßen Verfahrens eignet sich eine Fixiervorrichtung mit
- einem kissenförmigen, als Auflage für ein Bauteil, insbesondere polymeres Kfz-Außenanbauteil, dienendes Auflageelement aus einem elastischen Material, vorzugsweise Silikon oder einem Gummi,
- wobei das Auflageelement eine vorzugsweise konvexe Fixieroberfläche aufweist, und
- einer Einrichtung zur Erzeugung eines Unterdrucks an der Kontaktfläche zwischen Fixieroberfläche und Bauteil.

Hierbei weist das Auflageelement zweckmäßigerweise im Zentrum eine Ausnehmung auf, in der ein eine zweite Kontaktfläche zum Bauteil bildender Auflagepunkt aus einem unelastischen Material, vorzugsweise Metall, vorgesehen ist.

Vorzugsweise ist die Einrichtung zur Unterdruckerzeugung, beispielsweise in Kissenebene gesehen, zwischen Auflagepunkt und Auflageelement angeordnet. Die Einrichtung zur Erzeugung des Unterdrucks kann z.B. über Leitungen an eine Vakuumpumpe angeschlossen sein, die beim Betrieb im Bereich der Fixieroberfläche des Auflageelementes Luft absaugt und damit das Bauteil durch den hierdurch entstehenden Unterdruck an seiner Rückseite auf dem Auflageelement fixiert. In vorteilhafter Weise ist die Einrichtung zur Unterdruckerzeugung konzentrisch um den Auflagepunkt herum angeordnet und zweckmäßigerweise als - vorzugsweise kreisförmige - Vertiefung mit Anschlussvorrichtungen zum Anschluss der vorgenannten Leitungen zur Vakuumpumpe ausgebildet. Zweckmäßigerweise weist das elastische Auflageelement einen vorstehenden ringförmigen Steg auf, der eine ringförmige Kontaktfläche zum Bauteil bildet. Dieser Steg hat in vorteilhafter Weise während der Unterdruckerzeugung eine abdichtende Wirkung, da das Bauteil auf ihm mit einer geschlossen ringförmigen Auflagefläche aufliegen kann und die Einrichtung zur Unterdruckerzeugung sich innerhalb des Stegs befindet.

Im Folgenden wird die Erfindung anhand einer lediglich ein Ausführungsbeispiel darstellenden Zeichnung ausführlich erläutert. Es zeigen schematisch:
- Fig. 1: eine Vorrichtung zur Durchführung eines erfindungsgemäßen Verfahrens mit Fixiervorrichtung ohne zu vermessendes Bauteil
- Fig. 2: die in Fig. 1 dargestellte Vorrichtung mit zu vermessenem Bauteil
- Fig. 3 a - d: Einzeldarstellungen der in den Fig. 1, 2 gezeigten Fixiervorrichtung in unterschiedlichen Ansichten

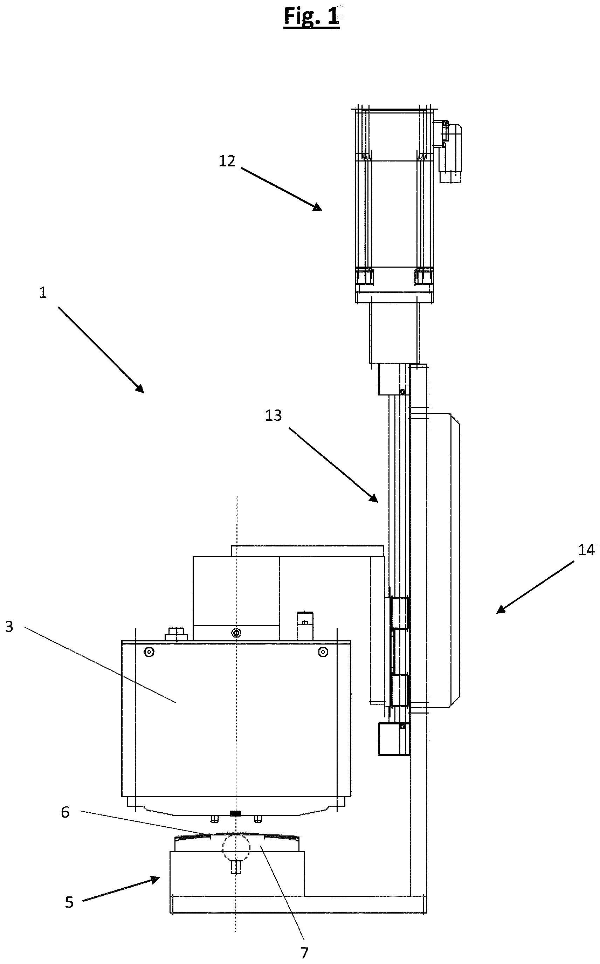

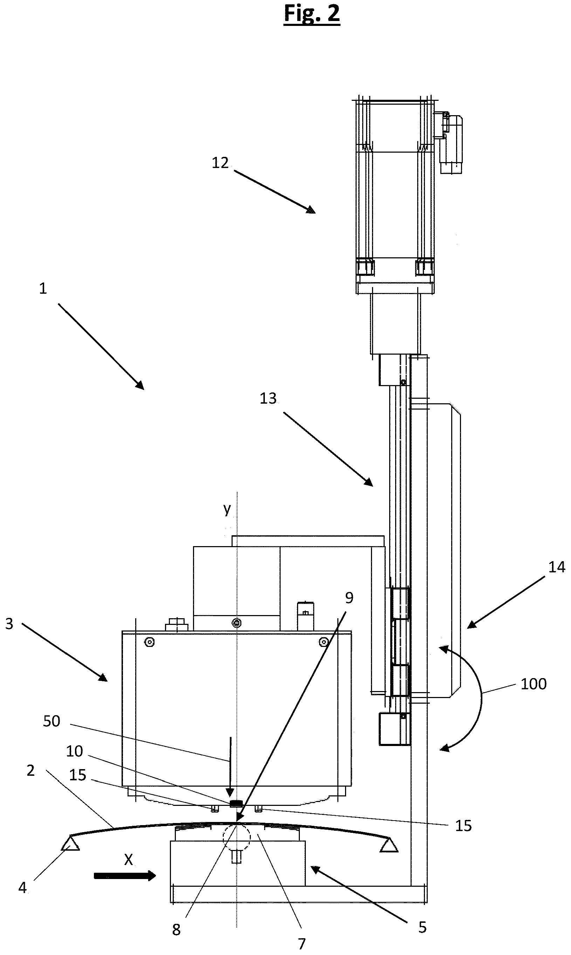

Die Fig. 1, 2 zeigen jeweils eine Vorrichtung 1, mit deren Hilfe ein erfindungsgemäßes Verfahren durchgeführt werden kann. Das Verfahren dient im Ausführungsbeispiel zur außenseitigen Qualitätskontrolle eines polymeren Außenanbauteils für ein Kraftfahrzeug in Form eines lackierten Stoßfängers 2 mittels eines Messvorgangs, wobei hierdurch andere Anwendungen, beispielsweise außerhalb des Automobilbaus, nicht ausgeschlossen werden. Bei dem Messvorgang handelt es sich um eine Farbkontrollmessung zur Überprüfung der außenseitigen Lackierung, wofür ein entsprechend geeignetes Messgerät 3 zum Einsatz kommt. Während des Messvorgangs ist der Stoßfänger 2 an einer grundsätzlich beliebig gestalteten Halteeinrichtung 4 angeordnet. Zwecks Durchführung des Messvorganges nähert sich das Messgerät 3 an die äußere Oberfläche der Vorderseite des zu vermessenden Stoßfängers 2 an, wobei diese Annäherung des Messgerätes 3 automatisiert durchgeführt wird. Während des Messvorganges erfolgt eine zusätzliche rückseitige Fixierung des Stoßfängers 2 in dem dem Messgerät 3 unmittelbar benachbarten Bereich der Stoßfängerrückseite mittels einer einen Unterdruck erzeugenden Fixiervorrichtung 5, wodurch ein Wegrutschen des Stoßfängers 2 während des Messvorganges sicher verhindert wird. Im Ausführungsbeispiel erfolgt die Annäherung des Messgerätes 3 an die äußere Oberfläche des Stoßfängers 2 durch eine Verfahrbewegung des Messgerätes 3 (gekennzeichnet durch den Pfeil 50 in Fig. 2).

Wie einer vergleichenden Betrachtung der Fig. 1 und 2 zu entnehmen ist, weist die Fixiervorrichtung 5 eine Fixieroberfläche 6 auf, deren Kontur an den rückseitigen Fixierbereich des Stoßfängers 2 angepasst ist. Im Ausführungsbeispiel ist die Fixieroberfläche 5 konvex ausgebildet und entspricht dabei im Wesentlichen der lokalen Krümmung des Stoßfängers 2 an seiner der zu vermessenden Oberfläche abgewandten Rückseite. Die Fixiervorrichtung 5 weist ein kissenförmiges Auflageelement 7 aus einem elastischen Material, vorzugsweise Silikon oder einem Gummi, auf. Hierdurch wird der Aufbau des Unterdrucks zur Fixierung begünstigt und die Fixiervorrichtung 5 besitzt außerdem eine Anpassungsmöglichkeit an die lokale Kontur der Rückseite des Stoßfängers 2.

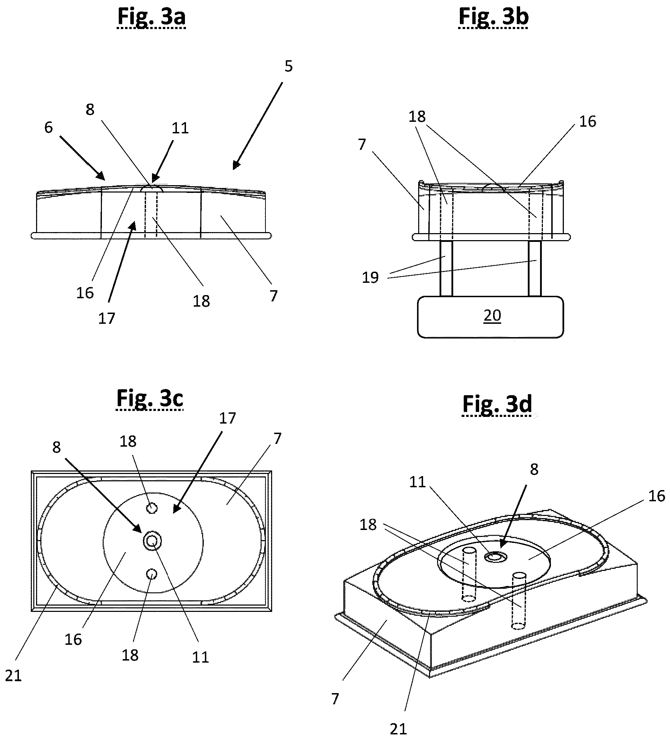

Ferner ist insbesondere anhand einer vergleichenden Betrachtung der Fig. 2 mit den Fig. 3a - d zu erkennen, dass die Fixiervorrichtung 5 einen zentrischen Auflagepunkt 8 aus einem unelastischen Material aufweist, der im Ausführungsbeispiel aus Metall besteht. Dieser rückseitige Auflagepunkt 8 für den Stoßfänger 2 liegt dem Messpunkt 9 auf der Stoßfängeraußenseite genau gegenüber, bildet also während des Messvorgangs mit dem Messpunkt 9 an der Stoßfängeraußenseite eine senkrecht zur lokalen äußeren Stoßfängeroberfläche stehende Vermessungsachse y. Konstruktiv bedingt liegen das Messgerät 3 mit seinem (im Ausführungsbeispiel durch einen Messkopf 10 des Messgerätes 3 definierten) Messpunkt 9 und der Auflagepunkt 8 starr auf einer gemeinsamen Achse, die der Vermessungsachse y entspricht. Der unelastische Auflagepunkt 8, der beispielsweise einen nach außen hin kugelförmigen Oberflächenbereich besitzt, weist in seiner Mitte ein abgeflachtes Zentrum 11 auf. Der Auflagepunkt 8 gewährleistet einen während des gesamten Messvorganges definierten Abstand zwischen der zu vermessenden Oberfläche des Stoßfängers 2 und dem sich in Messposition befindlichen Messgerät 3.

Fig. 2 zeigt, dass das Messgerät 3 über eine mittels eines Elektromotors 12 angetriebene Linearführungseinrichtung 13 in Form einer Spindel gegen die äußere Oberfläche des Stoßfängers 2 zugestellt wird, wobei die Fixierung des Stoßfängers 2 durch den Aufbau des Unterdrucks mittels der Fixiervorrichtung 5 vor der Heranführung des Messgerätes 3 an die äußere Oberfläche des Stoßfängers 2 erfolgt. Das Messgerät 3 und die Fixiervorrichtung 5 sind gemeinsam an einer automatisch verfahrbaren Einrichtung in Form eines (nicht näher dargestellten) Industrieroboters montiert. Hierzu ist an den Industrieroboter eine als C-förmiger Bügel ausgebildete Haltevorrichtung 14 angeschlossen, an dessen einander gegenüberliegenden Enden die Fixiervorrichtung 5 einerseits sowie das an der Spindel 13 montierte Messgerät 3 andererseits angeordnet sind. Während des Messvorganges befindet sich der zu vermessende Bereich des Stoßfängers 2 dann innerhalb einer vom C-förmigen Bügel 14 aufgespannten Ebene, vergleichbar mit der Positionierung wie in einer Schraubzwinge.

Bevor ein Messvorgang durchgeführt wird, erfolgt zunächst eine messtechnische Sicherstellung, dass das Messgerät 3 lotrecht auf der zu vermessenden Oberfläche des Stoßfängers 2 steht. Hierzu wird das Messgerät 3 an den Stoßfänger 2 herangefahren (s. Pfeil 50 in Fig. 2) und mit am Messgerät 3 zusätzlich vorhandenen Abstandssensoren 15 werden vor der Durchführung der Farbkontrollmessung vorab entsprechende Abstandsmessungen durchgeführt. Die Abstandssensoren 15 sind im Ausführungsbeispiel umfangsseitig um den Messkopf 10 des Messgerätes 3 herum angeordnet und sollen allesamt einen innerhalb eines Toleranzfeldes liegenden identischen Abstand zur zu vermessenden Stoßfängeroberfläche messen, wodurch die senkrechte Ausrichtung dieser Oberfläche zum Messkopf 10 sichergestellt ist. Falls keine ausreichend genau lotrechte Ausrichtung gemessen wird, führt der Industrieroboter und damit die gesamte daran montierte Haltevorrichtung 14 bei weiterhin bestehender Bauteilfixierung vor dem Messvorgang eine, ggf. mehrere Schwenkbewegung(en) aus (angedeutet durch den Doppelpfeil 100), um die exakt senkrechte Ausrichtung des Messgerätes 3 und damit des Messkopfes 10 zur äußeren Oberfläche des Stoßfängers 2 am Messpunkt 9 sicherzustellen. Hierbei kann die zu vermessende Oberfläche, insbesondere aufgrund der Flexibilität des Auflageelementes 7, ihre Position weitestgehend beibehalten und wird nicht mitgekippt. Dies ermöglicht ein besonders schnelles und ggf. auch wiederholgenaues Ausrichten des Messgerätes 3. Die vorbeschriebene Qualitätskontrolle wird an unterschiedlichen Stellen der äußeren Oberfläche des Stoßfängers 2 durchgeführt, wobei hierfür das Messgerät 3 nacheinander - wie beschrieben - jeweils an die gewünschten Stellen der äußeren Bauteiloberfläche angenähert und hierzu die automatisch verfahrbare Einrichtung entsprechend in unterschiedliche Positionen verfahren wird. Bei dem im Ausführungsbeispiel zu vermessenden Kfz-Stoßfänger 2 handelt sich um ein großflächiges Bauteil mit einer äußeren Oberfläche von mehr als 0,3 m². Die Materialstärke des Stoßfängers 2 ist vergleichsweise gering und beträgt über den gesamten Stoßfänger 2 gemittelt weniger als 1 cm.

Fig. 3 a - d zeigen im Detail die Fixiervorrichtung 5 zur Durchführung des vorbeschriebenen Verfahrens. Die Fig. 3b entspricht hierbei der Ansicht der Fixiervorrichtung 5 in den Fig. 1 bzw. 2, die Fig. 3a die Ansicht X in Fig. 2, die Fig. 3c einer Draufsicht von oben und Fig. 3d eine dreidimensionale Darstellung der Fixiervorrichtung 5. Wie bereits beschrieben, weist die Fixiervorrichtung 5 ein kissenförmiges Auflageelement 7 auf, das als Auflage für den Stoßfänger 2 dient und aus einem elastischen Material besteht, z.B. Silikon oder einem Gummi. Das Auflageelement 7 besitzt eine konvexe Fixieroberfläche 6, die sich aufgrund der Elastizität des Auflageelementes 7 an die rückseitige Kontur des zu vermessenden Bereiches des Stoßfängers 2 flexibel anpassen kann. Die Fixiervorrichtung 5 besitzt ferner eine Einrichtung 16 zur Erzeugung eines Unterdrucks an der Kontaktfläche zwischen Fixieroberfläche 6 und Stoßfänger 2. Das Auflageelement 7 weist im Zentrum eine Ausnehmung 17 auf, in der der eine zweite Kontaktfläche zum Stoßfänger 2 bildende Auflagepunkt 8 aus einem unelastischen Material, beispielsweise einem Metall, sowie die Einrichtung 16 zur Erzeugung des Unterdrucks angeordnet ist. Die Einrichtung 16 zur Unterdruckerzeugung befindet sich in Kissenebene gesehen zwischen Auflagepunkt 8 und Auflageelement 7 und ist über in Fig. 3b angedeutete Leitungen 19 an eine elektrisch betriebene Vakuumpumpe 20 angeschlossen, die beim Betrieb im Bereich der Fixieroberfläche 6 des Auflageelementes 7 Luft absaugt und damit den Stoßfänger 2 durch den hierdurch entstehenden Unterdruck an seiner Rückseite auf dem Auflageelement 7 fixiert. Die Einrichtung 16 zur Unterdruckvorrichtung ist konzentrisch um den Auflagepunkt 8 herum angeordnet und als kreisförmige Vertiefung mit als Absaugöffnungen 18 ausgebildete Anschlussvorrichtungen zum Anschluss der vorgenannten Leitungen 19 zur Vakuumpumpe 20 ausgebildet. Das elastische Auflageelement 7 weist ferner einen vorstehenden ringförmigen Steg 21 auf, der eine Kontaktfläche zum Stoßfänger 2 bildet. Dieser Steg 21 hat während der Unterdruckerzeugung eine abdichtende Wirkung, da der Stoßfänger 2 auf ihm mit einer geschlossen ringförmigen Auflagefläche aufliegen kann und die Einrichtung zur Unterdruckerzeugung 16 sich innerhalb des Stegs 21 befindet.

## Patentansprüche

1. Verfahren zur außenseitigen Qualitätskontrolle von Bauteilen (2), insbesondere polymeren Außenanbauteilen für Kraftfahrzeuge, mittels eines Messvorgangs, insbesondere einer Farbmessung, mit einem Messgerät (3),
- wobei das Bauteil (2) während des Messvorgangs an einer Halteeinrichtung (4) angeordnet wird und
- wobei sich das Messgerät (3) zwecks Durchführung des Messvorgangs an die äußere Oberfläche der Vorderseite des zu vermessenden Bauteils (2) annähert,
- wobei die Annäherung des Messgeräts (3) an die äußere Oberfläche des Bauteils (2) automatisiert durchgeführt wird, und
- wobei während des Messvorganges eine zusätzliche rückseitige Fixierung des Bauteils (2) in dem dem Messgerät (3) unmittelbar benachbarten Bereich der Bauteilrückseite mittels einer einen Unterdruck erzeugenden Fixiervorrichtung (5) erfolgt,
**dadurch gekennzeichnet, dass** die Fixiervorrichtung (5) einen zentrischen Auflagepunkt (8) aus einem unelastischen Material aufweist, der während des Messvorgangs mit dem Messpunkt (9) an der Bauteilaußenseite eine senkrecht zur lokalen äußeren Bauteiloberfläche stehende Vermessungsachse (y) bildet, und dass das Messgerät (3) mit seinem Messpunkt (9) und die Mitte des Auflagepunktes (8) starr auf einer gemeinsamen Achse liegen, die der Vermessungsachse (y) entspricht.

2. Verfahren nach Anspruch 1, **dadurch gekennzeichnet, dass** die Fixiervorrichtung (5) eine vorzugsweise konvexe Fixieroberfläche (6) aufweist, deren Kontur an den rückseitigen Fixierbereich des Bauteils (2) angepasst ist.

3. Verfahren nach Anspruch 1 oder 2, **dadurch gekennzeichnet, dass** die Fixiervorrichtung (5) ein kissenförmiges Auflageelement (7) aus einem elastischen Material, vorzugsweise Silikon oder einem Gummi, aufweist.

4. Verfahren nach einem der Ansprüche 1 bis 3, **dadurch gekennzeichnet, dass** das Messgerät (3) über eine, beispielsweise motorisch angetriebene, Linearführungseinrichtung (13), insbesondere eine Spindel, gegen die äußere Oberfläche des Bauteils (2) zugestellt wird.

5. Verfahren nach einem der Ansprüche 1 bis 4, **dadurch gekennzeichnet, dass** die Fixierung des Bauteils (2) durch den Aufbau des Unterdrucks vor der Heranführung des Messgerätes (3) an die äußere Bauteiloberfläche erfolgt.

6. Verfahren nach einem der Ansprüche 1 bis 5, **dadurch gekennzeichnet, dass** die äußere Oberfläche des Bauteils (2) zumindest bereichsweise von einer Lackierung gebildet wird.

7. Verfahren nach einem der Ansprüche 1 bis 6, **dadurch gekennzeichnet, dass** das Messgerät (3) und die Fixiervorrichtung (5) gemeinsam an einer automatisch verfahrbaren Einrichtung, vorzugsweise an einem Industrieroboter montiert werden.

8. Verfahren nach Anspruch 7, **dadurch gekennzeichnet, dass** die automatisch verfahrbare Einrichtung nach der Bauteilfixierung und vor dem Messvorgang mindestens eine Schwenkbewegung (100) ausführt, um die exakt senkrechte Ausrichtung des Messgerätes (3) zur äußeren Bauteiloberfläche am Messpunkt (9) sicherzustellen.

9. Verfahren nach Anspruch 7 oder 8, **dadurch gekennzeichnet, dass** die Qualitätskontrolle an unterschiedlichen Stellen der äußeren Bauteiloberfläche durchgeführt wird, hierfür das Messgerät (3) nacheinander jeweils den gewünschten Stellen der äußeren Bauteiloberfläche angenähert und hierzu die automatisch verfahrbare Einrichtung entsprechend in unterschiedliche Positionen verfahren wird.

## Claims

1. Method for exterior quality control of components (2), in particular polymer exterior add-on components for motor vehicles, by means of a measuring process, in particular a colour measurement, with a measuring device (3),
- wherein the component (2) is arranged on a holding device (4) during the measuring process, and
- wherein the measuring device (3) approaches the outer surface of the front side of the component (2) to be measured in order to carry out the measuring process,
- wherein the approach of the measuring device (3) to the outer surface of the component (2) is carried out automatically, and
- wherein, during the measuring process, the component (2) is additionally fixed at the rear in the area of the rear of the component immediately adjacent to the measuring device (3) by means of a fixing device (5) generating a vacuum,
**characterised in that** the fixing device (5) has a central support point (8) made of an inelastic material, which, during the measuring process, forms a measurement axis (y) perpendicular to the local outer component surface with the measuring point (9) on the outside of the component, and **in that** the measuring device (3) with its measuring point (9) and the centre of the support point (8) lie rigidly on a common axis that corresponds to the measurement axis (y).

2. Method according to claim 1, **characterised in that** the fixing device (5) has a preferably convex fixing surface (6), the contour of which is adapted to the rear fixing area of the component (2).

3. Method according to claim 1 or 2, **characterised in that** the fixing device (5) has a cushion-shaped support element (7) made of an elastic material, preferably silicone or a rubber.

4. Method according to any one of claims 1 to 3, **characterised in that** the measuring device (3) is fed against the outer surface of the component (2) via a linear guide device (13), for example a motor-driven linear guide device, in particular a spindle.

5. Method according to any one of claims 1 to 4, **characterised in that** the component (2) is fixed by the build-up of negative pressure before the measuring device (3) is brought to the outer surface of the component.

6. Method according to one of claims 1 to 5, **characterised in that** the outer surface of the component (2) is formed by a coating, at least in certain areas.

7. Method according to any one of claims 1 to 6, **characterised in that** the measuring device (3) and the fixing device (5) are mounted together on an automatically movable device, preferably on an industrial robot.

8. Method according to claim 7, **characterised in that** the automatically movable device performs at least one swivelling movement (100) after the component has been fixed and before the measuring process in order to ensure that the measuring device (3) is aligned exactly perpendicular to the outer component surface at the measuring point (9).

9. Method according to claim 7 or 8, **characterised in that** the quality control is carried out at different points on the outer surface of the component, for this purpose the measuring device (3) is moved successively towards the desired points on the outer surface of the component and the automatically movable device is moved to different positions accordingly.

## Revendications

1. Procédé de contrôle de la qualité extérieure de composants (2), notamment de composants extérieurs en polymère pour véhicules automobiles, au moyen d'un processus de mesure, notamment d'une mesure de couleur, avec un outil de mesure (3),
- le composant (2) étant agencé sur un appareil de maintien (4) pendant le processus de mesure, et
- l'outil de mesure (3) s'approchant de la surface extérieure du côté avant du composant (2) à mesurer afin d'effectuer le processus de mesure,
- l'approche de l'outil de mesure (3) vers la surface extérieure du composant (2) étant effectuée de manière automatisée, et
- une fixation supplémentaire du côté arrière du composant (2) étant effectuée pendant le processus de mesure dans la zone du côté arrière du composant directement voisine de l'outil de mesure (3) au moyen d'un dispositif de fixation (5) générant une dépression,
**caractérisé en ce que** le dispositif de fixation (5) présente un point d'appui central (8) en un matériau non élastique qui, pendant le processus de mesure, forme avec le point de mesure (9) sur le côté extérieur du composant un axe de mesure (y) perpendiculaire à la surface extérieure locale du composant, et **en ce que** l'outil de mesure (3) avec son point de mesure (9) et le centre du point d'appui (8) se trouvent rigidement sur un axe commun qui correspond à l'axe de mesure (y).

2. Procédé selon la revendication 1, **caractérisé en ce que** le dispositif de fixation (5) présente une surface de fixation (6), de préférence convexe, dont le contour est adapté à la zone de fixation arrière du composant (2).

3. Procédé selon la revendication 1 ou 2, **caractérisé en ce que** le dispositif de fixation (5) présente un élément d'appui (7) en forme de coussin en un matériau élastique, de préférence en silicone ou en caoutchouc.

4. Procédé selon l'une quelconque des revendications 1 à 3, **caractérisé en ce que** l'outil de mesure (3) est approché de la surface extérieure du composant (2) par l'intermédiaire d'un appareil de guidage linéaire (13), notamment d'une broche, par exemple motorisé.

5. Procédé selon l'une quelconque des revendications 1 à 4, **caractérisé en ce que** la fixation du composant (2) est réalisée par l'établissement de la dépression avant l'approche de l'outil de mesure (3) contre la surface extérieure du composant.

6. Procédé selon l'une quelconque des revendications 1 à 5, **caractérisé en ce que** la surface extérieure du composant (2) est formée au moins par zones par une peinture.

7. Procédé selon l'une quelconque des revendications 1 à 6, **caractérisé en ce que** l'outil de mesure (3) et le dispositif de fixation (5) sont montés ensemble sur un appareil déplaçable automatiquement, de préférence sur un robot industriel.

8. Procédé selon la revendication 7, **caractérisé en ce que** l'appareil déplaçable automatiquement effectue au moins un mouvement de pivotement (100) après la fixation du composant et avant le processus de mesure, afin de garantir l'orientation exactement perpendiculaire de l'outil de mesure (3) par rapport à la surface extérieure du composant au point de mesure (9).

9. Procédé selon la revendication 7 ou 8, **caractérisé en ce que** le contrôle de la qualité est effectué à différents endroits de la surface extérieure du composant, en rapprochant pour cela l'outil de mesure (3) successivement des endroits souhaités de la surface extérieure du composant et en déplaçant pour cela l'appareil déplaçable automatiquement dans différentes positions.
